# EUROPÄISCHE PATENTANMELDUNG

(11) **EP 0 734 750 A1**
(43) Veröffentlichungstag der Anmeldung: **02.10.1996**
(21) Anmeldenummer: 95104791.9
(22) Anmeldetag: 31.03.1995
(51) Int. Cl.: B01D 17/02, E03F 5/16

(54) **Leichtflüssigkeitsabscheider-Anlage**

(71) Anmelder: Hammerschmitt, Nikolaus, D-53879 Euskirchen (DE)
(72) Erfinder: Hammerschmitt, Nikolaus, D-53879 Euskirchen (DE)

(57) **Zusammenfassung**

Kompakte Leichtflüssigkeitsabscheider-Anlage mit integriertem, 2-teiligen Schlammfang (1), mit Leichtflüssigkeits-Sammelraum (14) über dem Abscheideraum (16) und mit einem Feinabscheideraum (19), mit einem Zulaufverschluß (31) mit integrierter Überfüllsicherung mit selbsttätigem Leichtflüssigkeits-Ablauf, wo bei jedem Ruhestand die Oberfäche Leichtflüssigkeitsfrei ist, Zulaufverschuß mit integrierter Überfüllsicherung für drei Aufgaben mit einem Schwimmer und verlängerter Aufenthaltsdauer im Abscheide- und Feinabscheideraum durch vertikale Durchgangs-Anordnung.

## Beschreibung

Mit dem vorliegenden Patent-Erteilungsantrag wird eine Leichtflüssigkeitsabscheider-Anlage mit integriertem Schlammfang, mit vertikalem Auf- und Abwärtsdurchgang, mit kontinuierlichem Leichtflüssigkeitsablauf, mit mindestens einem Abscheide- und Feinabscheideraum, mit Zulaufverschluß und integrierter Überfüllsicherung beschrieben.

Herkömmliche Leichtflüssigkeitsabscheider sind mit einem Schlammfang ausgestattet, der mit einem Rohranschluß mit dem Abscheider verbunden ist. In den Schlammfang gelangt die Mischung aus Schlamm aller Arten und Leichtflüssigkeiten. Durch den Zufluß über ein Zuflußrohr entstehen im Schlammfang Turbulenzen, wobei Feinschlamm und Leichtflüssigkeit von der Strömung in den Abscheider und teilweise in den Kanal mitgeführt werden. Diese Mitführung wird dadurch begünstigt, daß in der Verbindung zum Abscheider durch erhöhte Geschwindigkeit Turbulenzen entstehen, die eine intensive Vermischung verursachen.

Durch die in der Erfindung nachfolgend beschriebenen, vorgenommene Integration fällt dem Schlammfang (1) die Aufgabe zu an den Funktionen des Abscheiders teilzunehmen, u.z.: neben Grob- und Feinschlamm einen möglichst hohen Anteil Leichtflüssigkeit zurückzuhalten und somit den Abscheider zu entlasten und nicht, daß die bereits auf der Oberfläche abgeschiedene Leichtflüssigkeit mit der Schwerflüssigkeit beim Übertritt in den Abscheider eine Emulsion vorbereitet.

Die Schlammfang-Oberfläche reicht bis zur Trennwand (5) zum Feinabscheideraum (19). Hier wird auf dem stark erhöhten Wasserspiegel der größte Anteil der Leichtflüssigkeit, nämlich ca. 98% zurückgehalten und über den kontinuierlichen Leichtflüssigkeitsablauf-Rohrstutzen (9) in den integrierten Leichtflüssigkeits-Speicher (15) abgeleitet, wie anschließend beschrieben.

Im Schlammfang (1) ist eine Trennwand (3) angeordnet und somit in einen Grobschlammabscheideraum und einen Feinschlammabscheideraum aufgeteilt. Die als Überlaufkante (4) ausgebildete Trennwand (3) verleiht dem nachfolgenden Feinschlammabscheideraum eine optimale Beruhigung und begünstigt die Zurückhaltung des Feinschlamms.

Auch die als Ablaufwand mit Überlaufkante (12) ausgebildete Zulaufwand (11) ersetzt die Kopfwand des Abscheideraums und Zu- und Ablaufrohrstutzen. Ferner ist durch diese Zulaufwand (11) der gesamte Wasserspiegel des Schlammfang-Bereichs (1) unverdrängbar, so daß 98% der anfallenden Leichtflüssigkeit über den kontinuierlichen Leichtflüssigkeitsablauf-Rohrstutzen (9) oder über den Leichtflüssigkeits-Sammelraum (14) in den Leichtflüssigkeits-Speicher (15) abgeleitet werden.

Auf diese Art und Weise wird der Schlammfang (1) zum Hauptbestandteil der Leichtflüssigkeitsabscheider-Anlage.

Der Schlammfang (1) mit Zulaufschacht (13) und Leichtflüssigkeits-Sammelraum (14) sind mit dem Abscheideraum (16) so integriert, daß sich bereits beim Zulaufstutzen (2) die Leichtflüssigkeit vom zulaufenden Leichtflüssigkeits-/Schwerflüssigkeits-Gemischs trennt und auf dem Wasserspiegel im Betrieb (17) ansammelt.

Die mit der Strömung mitgeführte Leichtflüssigkeit gelangt über den Zulaufschacht (13) in den Abscheideraum (16). Durch eine im Bodenbereich befindliche Strömungs-technische Einrichtung (18) sinkt hier das Flüssigkeits-Volumen mit einer extrem langsamen, gleichmäßigen Geschwindigkeit ab.

Um eine möglichst lange Aufenthaltszeit zu erreichen, wurden die Abscheideräume (16) und (19) mit Umlaufschacht (20) in vertikaler Richtung ausgebildet. Hierbei soll die vertikale Abwärts-Geschwindigkeit bei Nenndurchgang unter 2 cm/s betragen. Dabei wird der Querschnitt, bzw. die Oberfläche der Abscheideräume (16) und (19) vom Volumen des Durchgangs bestimmt. Die mit einer möglichst langen Aufenthaltszeit absinkende Leichtflüssigkeit steigt in den Leichtflüssigkeits-Sammelraum (14) auf und sammelt sich am Wasserspiegel der Ablaufsohle (22), u.z. bei Dichte 0,85 eine Leichtflüssigkeits-Säulenhöhe von 15% über dem Wasserspiegel und 85% unter dem Wasserspiegel, der entstehen würde, wenn keine Leichtflüssigkeit vorhanden wäre. Der Wasserspiegel selbst wird hierbei entsprechend der Dichte von der Leichtflüssigkeit verdrängt.

Geht man im vorliegenden Fall davon aus, daß 1% = 5mm beträgt, dann würde die Leichtflüssigkeits-Säule über dem Wasserspiegel 75mm und unter dem Wasserspiegel 85x5 = 425mm betragen, die untere Überlaufkante (13') im Zulaufschacht (13) vom Wasserspiegel im Ruhestand (23) bis zur Überlaufkante beträgt 75 + 425 = 500mm.

Hierbei würde natürlich nichts ablaufen.

Wenn aber die ganze Leichtflüssigkeits-Höhe von 500mm nur 499mm beträgt, läuft das gesamte Volumen, das sich in der Anlage befindet, in den Leichtflüssigkeits-Sammelraum (14) ab, ausgenommen das Funktions-bedingte Volumen, u.z. deshalb nicht, weil das Volumen von 500mm Höhe ./. 499mm = 1mm mit abgelaufen ist und nunmehr von der Überlaufkante von 499 anstatt 500mm zurückgehalten wird.

In dieser Situation wird die Anlage in Betrieb genommen.

Der Wasserspiegel im Ruhestand (23) steigt bis zum Wasserspiegel im Betrieb (17). Hierbei drückt der steigende Wasserspiegel den Inhalt des Leichtflüssigkeits-Sammelraums (14) in den Leichtflüssigkeits-Speicher (15), die Funktions-bedingte Leichtflüssigkeit im Zulaufschacht (13) steigt mit dem Wasserspiegel im Ruhestand (23) an den Wasserspiegel im Betrieb (17) auf und verteilt sich auf der Oberfläche.

Im Leichtflüssigkeitsablauf-Rohrstutzen (10) verbleibt nur das Funktions-bedingte Volumen, d.h. Leichtflüssigkeits-Säule unter und über dem Wasserspiegel.

Alle im Betreib anfallende Leichtflüssigkeit wird,über das Funktions-bedingte Volumen im Leichtflüssigkeitsablauf-Rohrstutzen (10) hinaus, kontinuierlich in den Leichtflüssigkeits-Speicher (15) abgeführt, so daß der Leichtflüssigkeits-Sammelraum (14) für den nächsten Ruhestand immer aufnahmefähig ist.

Während des Betriebes sammelt sich gleichzeitig auf dem Wasserspiegel im Betrieb (17) neue Leichtflüssigkeit aus zufließendem Leichtflüssigkeits-/Schwerflüssigkeits-Gemischs zu einer Funktions-bedingten Leichtflüssigkeits-Schichtdicke an. Erreicht diese die nach unten gerichtete Überlaufkante (8) am Leichtflüssigkeitsablauf (6), dann fließt sie nach Ansammlung der Leichtflüssigkeits-Säule unter und über dem Wasserspiegel im Betrieb (17) im Leichtflüssigkeitsablauf-Rohrstutzen (10) über den Leichtflüssigkeitsablauf-Rohrstutzen (9) zum Leichtflüssigkeits-Speicher (15). Hier hat die Überlaufkante (8) die gleiche Aufgabe wie die Überlaufkante (12) im Zulaufschacht (13).

Abgesehen von einem etwaigen Leichtflüssigkeits-Film auf der Oberfläche des Feinabscheideraums (19) existiert im Ruhestand nur die Funktions-bedingte Leichtflüssigkeit im Zulaufschacht (13) vor dem Leichtflüssigkeits-Sammelraum (14).

Dieses Funktions-bedingte Leichtflüssigkeits-Volumen kann auch durch die Ablaßhähne (24) in den Leichtflüssigkeits-Speicher abgelassen werden. Wird sie abgelassen, beginnt der Leichtflüssigkeits-Bestand bei jeder Inbetriebnahme mit 0 - Leichtflüssigkeit.

Wird die Funktions-bedingte Leichtflüssigkeit nicht abgelassen, steigt diese mit dem steigenden Wasserspiegel im Betrieb (17) an die Oberfläche und verteilt sich dort.
Im Betrieb müssen die Ablaßhähne (24) geschlossen sein.

Aus folgendem Grund sind die Ablaßhähne (24) auf dem Wasserspiegel der Ablaufsohle (22) an der Außenwand (25) zum Leichtflüssigkeits-Speicher (15) angebracht: Der Wasserspiegel der Ablaufsohle (22) ist maßgebend für den Leichtflüssigkeits-Stand über und unter dem Wasserspiegel. In der Anlage verteilt sich die Leichtflüssigkeit auf dem Wasserspiegel, beim Beispiel Dichte 0,85, d.h. 15 : 85, bzw. 75mm über und 425mmunter dem Wasserspiegel, also bei 15% Ablauf über dem Wasserspiegel laufen 85% unter dem Wasserspiegel ab. Bei Dichte 0,90 ergeben sich 10% über und 90% unter dem Wasserspiegel.

Auf diese Weise stimmen die Ablaßhähne (24) bei jeder höheren Dichte.

Anders ist es beim Leichtflüssigkeitsablauf innerhalb des Abscheideraums (16): Will man den Leichtflüssigkeitsablauf unter dem Wasserspiegel ermitteln, so muß immer von der Leichtflüssigkeits-Säule über dem Wasserspiegel ausgegangen werden, z.B. bei Dichte 0,85 beträgt die Leichtflüssigkeits-Säule über dem Wasserspiegel 75mm, dann beträgt die Leichtflüssigkeitssäule unter dem Wasserspiegel 75 : 0,15 x 0,85 = 425mm, bei Dichte 0,90 75 : 0,10 x 0,90 = 675mm.

Wie zu sehen ist, beträgt die Leichtflüssigkeits-Säule unter dem Wasserspiegel bei Dichte 0,90 = 675mm, also 250mm mehr als bei Dichte 0,85.

Wenn hier trotzdem Leichtflüssigkeit höherer Dichten schon bei 425mm unter dem Wasserspiegel ablaufen so deshalb, weil bei Erreichen von 425mm Leichtflüssigkeits-Säule unter dem Wasserspiegel nur eine Leichtflüssigkeits-Säule von 47mm über dem Wasserspiegel erforderlich ist, also 40 : 0,10 x 0,90 = 423mm.

Da geringe Fertigungstoleranzen unvermeidbar sind, wird vom geplanten Leichtflüssigkeitsablauf unter dem Wasserspiegel ein kleiner Abzug vorgenommen.

### Leichtflüssigkeitsabscheider

Der Durchgang des Leichtflüssigkeits-/Schwerflüssigkeits-Gemischs ist durch Richtungspfeile angezeigt, u.z. strömt es über den Zulaufverschluß (26) in den Schlammfang (1) und verteilt sich auf die ganze Breite im Schlammfang (1). Im Schlammfang (1) sinken die festen Schwerstoffe ab und sammeln sich auf dem BOden, während sich die aufsteigende Leichtflüssigkeit am Wasserspiegl im Betrieb (17) ansammelt, wobei entsprechend der Leichtflüssigkeitsdichte der Wasserspiegel von der Leichtflüssigkeit verdrängt wird, z.B. bei Dichte 0,85 15% über und 85% unter dem Wasserspiegel, der entstehen würde, wenn keine Leichtflüssigkeit vorhanden wäre, d.h. Durchgang-unabhängiger Wasserspiegel plus Durchgang-abhängige Schwankungen. In den Ab scheider selbst gelangen 100% des Durchgangs, einschließlich ca. 2% der anfallenden Leichtflüssigkeit.

Vom Schlammfamg (1) aus gelangt die Flüssigkeit über den Zulaufschacht (13) in den Leichtflüssigkeits-Sammelraum (14), wobei sich die Rest-Leichtflüssigkeit nach oben absetzt, während die Aufenthaltszeit der Schwerflüssigkeit durch eine Strömungs-technische Einrichtung (18) im Abscheideraum (16) verlängert wird. Über den Umlaufschacht (20) gelangt die Flüssigkeit in den Feinabscheideraum (19). Hier findet eine weitere extreme Verlangsamung der Absinkgeschwindigkeit durch die im Bodenbereich angeordnete Strömungs-technische Einrichtung (18') statt. durch diesen vertikalen Durchgang wird eine Art Gegenströmungs-Abscheidung bewirkt, wobei gleichzeitig eine gegenseitige Beflockung der sich abscheidenden Leichtflüssigkeits-Tröpfchen im vertikal angeordneten Feinabscheideraum (19) und der sich abscheidenden Leichtflüssigkeits-Tröpfchen des zufließenden Leichtflüssigkeits-/Schwerflüssigkeits-Gemischs stattfindet.

Es sei noch vermerkt, je tiefer dieser Feinabscheideraum (19) angeordnet ist, um so höher wird der Wasserdruck. so daß hierbei ein Herauspressen auch der kleinsten Leichtflüssigkeits-Bestandteile vollzogen wird.

Dieser Feinabscheideraum (19) dient auch bei Bedarf zur Aufnahme von Koaleszenzmaterial, um auch höchsten Ansprüchen gerecht zu werden.

Durch eine weitere Öffnung (27) an der teifsten Stelle des Feinabscheideraums (19) gelangt die gereinigte Schwerflüssigkeit über die Überlaufkante (30) der Ablaufwand (28) in den Ablauf (29).

### Zulaufverschluß mit integrierter Überfüllsicherung

Herkömmliche Leichtflüssigkeitsabscheider sind in der Regel mit einem selbsttätigen Abschluß ausgestattet, der den Schwerflüssigkeitsablauf bei max. Leichtflüssigkeits-Stand abschließt. Hierbei staut die zufließende Flüssigkeit auf und drückt die Leichtflüssigkeit aus dem Speicher oder dem Abscheideraum ins Erdreich. Zur Beseitigung dieses Übels wurde die DIN 1999 im März 1989 geändert.

Bei einem Zulaufverschluß ist ein Aufstau im Abscheider ausgeschlossen.

Ein Zulaufverschluß arbeitet mit einem Oberflächenschwimmer, während der herkömmliche Abschluß am Auslauf mit einem Grenzschwimmer versehen ist. Dieser muß leichter sein als Schwer- und schwerer als Leichtflüssigkeit, d.h. beim Oberflächenschwimmer steht das Eigengewicht des Schwimmers, im Gegensatz zum Grenzschwimmer, zusätzlich zur Verfügung. Deshalb ist für die beschriebene Überfüllsicherung der genannte Zulaufverschluß entwickelt worden.

Bei der hier beschriebenen Leichtflüssigkeitsabscheider-Anlage ist direkt am Gehäuse (32) des Zulaufverschlusses (31) ein trockenes Schwimmergehäuse (48) angebracht, in dem sich in Höhe des Wasserspiegels im Ruhestand (23) ein Schwimmer (49) befindet.

Das Leichtflüssigkeits-/Schwerflüssigkeits-Gemisch strömt über den Zulauf-Rohrstutzen (2) in das Gehäuse (32) und verläßt das Gehäuse über den Auslaufstutzen (33) bei geöffnetem Abschlußorgan (34). Das Abschlußorgan (34) ist mit einer vorrichtung mit Kreuzgelenk (35) ausgestattet, dessen Bolzen über Kreuz in U-Profilen drehend und axial-verschiebbar, gelagert ist. Das untere Profil (36) über den Hebelbolzen (38), der von der Gelenkwelle (39) ausgeht, mit der Grundplatte (40) verbunden . Auf diese Weise ist das Abschlußorgan (34) nach allen Richtungen drehend und axial verschiebbar. Die Gelenkwelle (39) ist durch die Gehäusewand (42) nach außen geführt (Simmeringabdichtung) und mit einem Hebel (43) fest verbunden. Durch diesen Hebel (43) wird das Abschlußorgan (34) mittels eines Auslösehebels (44) ständig in der Stellung "Offen" gehalten. Der Auslösehebel (44) ist durch eine bewegliche Aufhängung (45) schwenkbar gehalten und liegt in einer Schlitzführung (46) über dem Schwimmergehäuse (48) der Überfüllsicherung (47) und endet vor dem Hebel (43), der das Abschlußorgan (34) offen hält. Überschreitet die Schwer- oder Leichtflüssigkeit den max. Stand, dann fließt diese Schwer- oder Leichtflüssigkeit in das trockene Schwimmergehäuse (48). Der aufsteigende Schwimmer (49) hebt den Auslösehebel (44) und gibt damit das Abschlußorgan (34) frei. Das Abschlußorgan (34) fällt nach der Auslösung abgedämpft durch den Wasserspiegel auf die Dichtfläche (41). Dabei zentriert sich das Abschlußorgan (34) und wird durch zufließende Leicht-/Schwerflüssigkeit angepreßt.

### Überfüllsicherung

Der Name sagt es: Eine Absicherung gegen unkontrolliertelierte, unvorhersehbare Überfüllung uns soll auch menschliches Versagen ersetzen. Insbesondere werden von dieser Sicherung voraussehbare Überfüllungen überwacht und verhindert, um Verschmutzungen von Erdreich, Oberflächen- und Grundwasser durch mineralische und sonstige Leichtflüssigkeiten auszuschließen. Diese Einrichtung setzt die Leichtflüssigkeitsabscheider-Anlage durch Schließen des Zulaufverschlusses (31) außer Betrieb.

Bei der Überfüllsicherung (47) sind die Überlaufkanten des Leichtflüssigkeitszulauf-Rohres (50) und des Schwerflüssigkeitzulauf-Rohfstutzens (51) am Schwimmergehäuse (48) getrennt so angeordnet, daß eine Erhöhung von 1mm zur Schließung des Zulaufverschlusses (31) ausreicht. Damit sind drei Aufgaben, nämlich die Verhinderung:
A der Überfüllung der Schwerflüssigkeitsbereiche, d.h. Schlammfang- und Abscheidebereich,
B der Überfüllung des Leichtflüssigkeits-Speichers,
C des Zufließens von Schwerflüssigkeit in den Leichtflüssigkeits-Speicher
zuverlässig erfüllt

Ein Ausführungsbeispiel der Erfindung ist in der Zeichnung dargestellt.

Es zeigen:

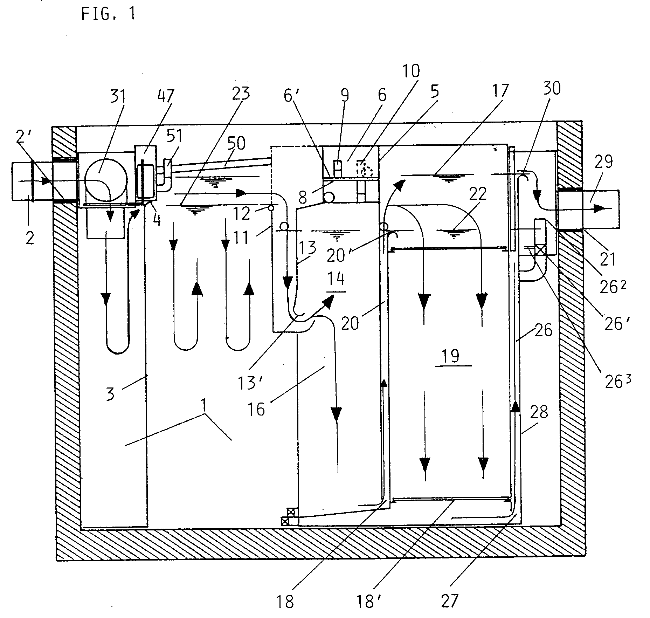

- FIG. 1: den Längsschnitt der Leichtflüssigkeitsabscheider-Anlage

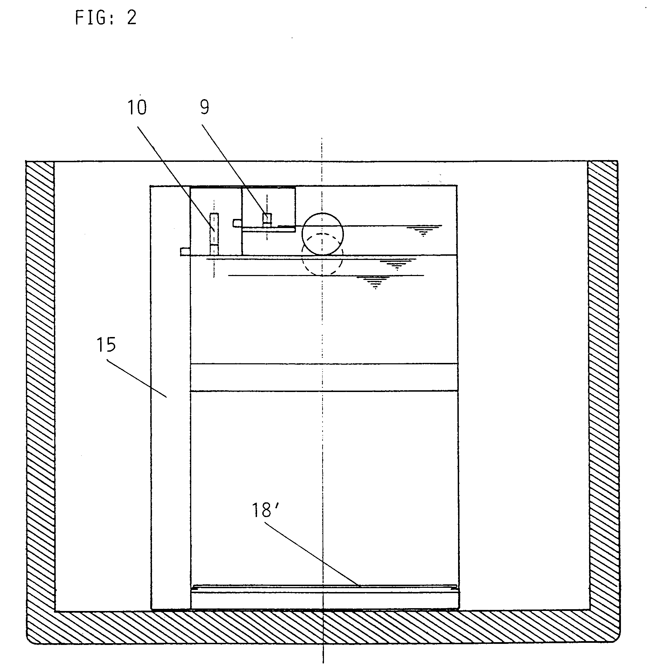

- FIG. 2: den QUerschnitt der Leichtflüssigkeisabscheider-Anlage

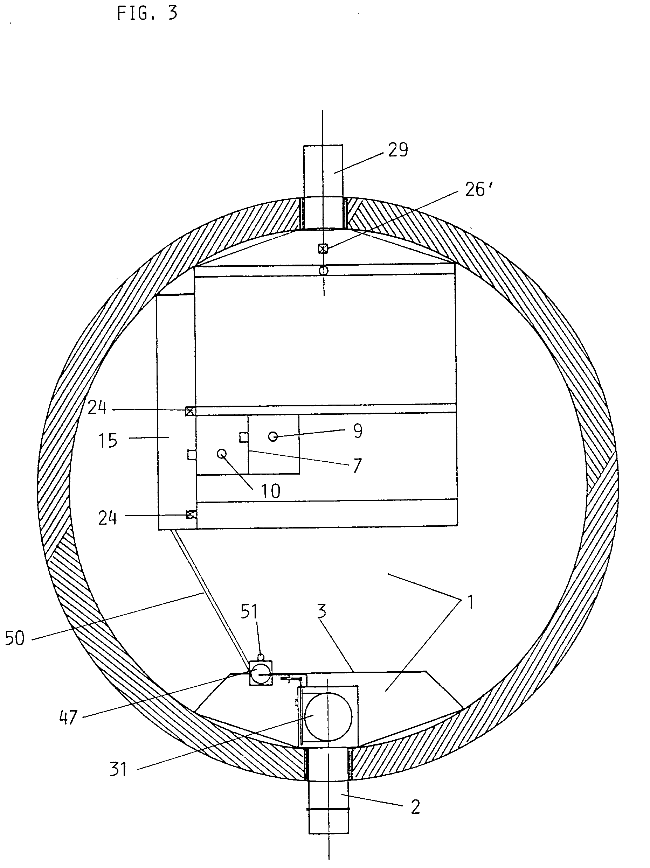

- FIG. 3: die Draufsicht der Leightflüsslgkeitsabscheider-Anlage

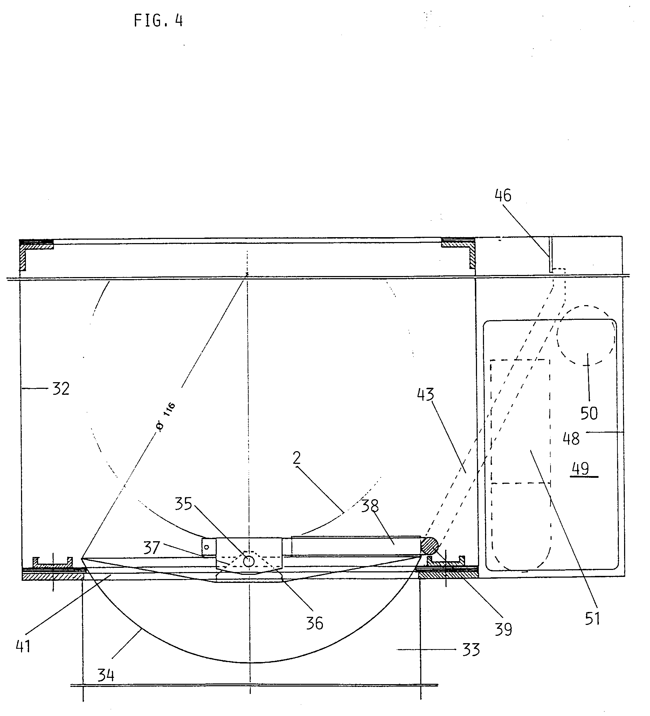

- FIG. 4: den Längsschnitt des Zulaufverschlusses mit integrierter Überfüllsicherung

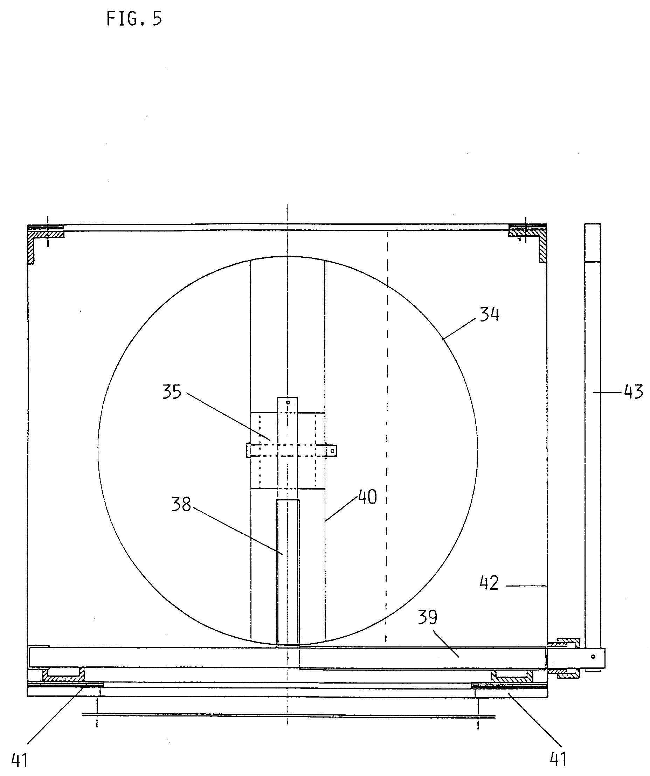

- FIG. 5: den Querschnitt des Zulaufverschlusses mit integrierter Überfüllsicherung

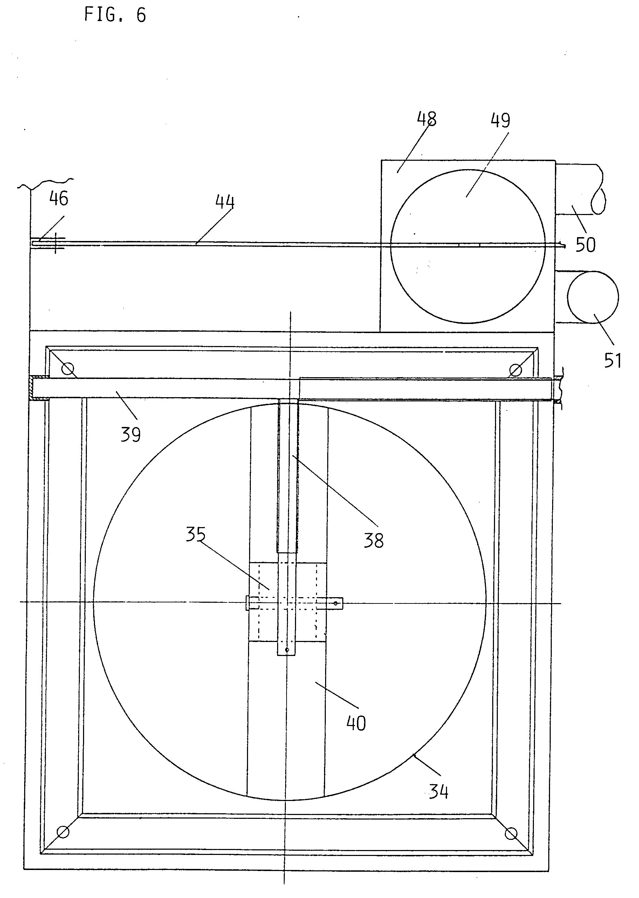

- FIG. 6: die Draufsicht des Zulaufverschlusses mit integrierter Überfüllsicherung

### Leichtflüssigkeitsabscheider-Anlage mit Zulaufverschluß und integrierter Überfüllsicherung Positions-Bezeichnung

- 1.: Schlammfang
- 2.: Zulauf-Rohrstutzen
- 2': Zulaufrohrsohle
- 3.: Trennwand
- 4.: Überlaufkante der Pos.(3)
- 5.: Trennwand zum Feinabscheideraum, Pos.(19)
- 6.: Leichtflüssigkeitsablauf
- 6': Zwischenboden der Pos.(6)
- 7.: Zwischenwand der Pos.(6)
- 8.: Überlaufkante der Pos.(6)
- 9.: Leichtflüssigkeitsablauf-Rohrstutzen, für kontinuierlichen Ablauf
- 10.: Leichtflüssigkeitsablauf-Rohrstutzen, für den Ablauf vom Leichtfl.-Sammelr.,Pos.(14)
- 11.: Zulaufwand
- 12.: Überlaufkante der Pos.(11)
- 13.: Zulaufschacht
- 13': Untere Überlaufkante der Pos.(13)
- 14.: Leichtflüssigkeits-Sammelraum
- 15.: Leichtflüssigkeits-Speicher
- 16.: Abscheideraum
- 17.: Wasserspiegel im Betrieb
- 18.: Strömungs-technische Einrichtung der Pos.(16)
- 18': Strömungs-technische Einrichtung der Pos.(19)
- 19.: Feinabscheideraum
- 20.: Umlaufschacht
- 20': Überlaufkante der Pos.(20)
- 21.: Ablaufrohrsohle
- 22.: Wasserspiegel der Ablaufrohrsohle Pos.(21)
- 23.: Wasserspiegel im Ruhestand
- 24.: Ablaßhähne
- 25.: Außenwand zum Leichtflüssigkeits-Speicher, Pos.(15)
- 26.: Ablaufschacht
- 26': Einrichtung zur Höheneinstellung
- 26²: Überlaufkante der Pos.(26³)
- 26³: Einstellhahn der Pos.(26')
- 27.: Öffnung zur Ablaufwand, Pos.(28)
- 28.: Ablaufwand
- 29.: Ablauf
- 30.: Überlaufkante der Pos.(28)
- 31.: Zulaufverschluß
- 32.: Gehäuse
- 33.: Auslaufstutzen
- 34.: Abschlußorgan
- 35.: Vorrichtung mit Kreuzgelenk
- 36.: Unteres Profil
- 37.: Oberes Profil
- 38.: Hebelbolzen
- 39.: Gelenkwelle
- 40.: Grundplatte
- 41.: Dichtfläche mit Flächendichtung
- 42.: Gehäusewand
- 43.: Hebel
- 44.: Auslösehebel
- 45.: Aufhängung
- 46.: Schlitzführung
- 47.: Überfüllsicherung
- 48.: Schwimmergehäuse
- 49.: Schwimmer
- 50.: Leichtflüssigkeitszulauf-Rohr
- 51.: Schwerflüssigkeitszulauf-Rohrstutzen

## Patentansprüche

1. Leichtflüssigkeitsabscheider-Anlage für die Trennung von Leichtflüssigkeits-/Schwerflüssigkeits-Gemischen, bestehend aus ein- oder mehrteiligem Schlammfang (1), mit oder ohne Zulaufverschluß (31) und integrierter Überfüllsicherung (47), mit einer Trennwand (3), mit einer Zulaufwand,(11)mit Überlaufkante (12) zum Zulaufschacht (13), mit einem im oberen Teil des nachfolgenden Abscheideraums (16) angeordneten Leichtflüssigkeits-Sammelraums (14), mit einem Leichtflüssigkeitsablauf (6), mit einem Umlaufschacht (20), der im unteren Teil eine Strömungs-technische Einrichtung (Schlitz) (18) besitzt, mit einem Feinabscheideraum (19), der im Bodenbereich ebenfalls eine Strömungs-technische Einrichtung (Lochblech) (18') aufweist, mit einem Ablaufschacht (26), der im Bereich der Ablaufsohle (21) eine Einrichtung zur Höheneinstellung (26') besitzt, mit einem Leichtflüssigkeits-Speicher (15), dadurch gekennzeichnet, daß die Überlaufkante (4) der Trennwand (3) geringfügig unter der Zulaufsohle (2') liegt, daß die Überlaufkante (12) der Zulaufwand (11) geringfügig tiefer angeordnet ist, als die Überlaufkante (4) der Trennwand (3), daß die Überlaufkante (20') am Umlaufschacht (20) mit der Höhe der Ablaufrohrsohle (21) identisch ist, daß die Überlaufkante (28') der Ablaufwand (28) geringfügig unter der Oberkante des Zulaufrohrstutzes (2) angeordnet ist, daß die Ablaufrohrsohle (21) um so viel tiefer unter dem Wasserspiegel im Ruhestand (23) angebracht ist, als es die Dichte der Leichtflüssigkeit erfordert, z.B. bei Dichte 0,85 = 150mm unter dem Wasserspiegel im Ruhestand (23), daß im Bereich der Ablaufsohle eine Einrichtung (26') angeordnet ist, mit der die Höhe der Ablaufrohrsohle (21) durch Einstellung der Überlaufkante(26²) bestimmt wird, z.B. bei Dichte 0,90 = 100mm unter dem Wasserspiegel im Ruhestand (23).

2. Leichtflüssigkeitsabscheider-Anlage nach Anspruch 1, dadurch gekennzeichnet, daß an der Vorrichtung (26') ein Einstellhahn (26³), (oder eine auswechselbare Querschnittverengung) angeordnet ist, um bei sehr geringem Durchgang die Überschreitung der Überlaufkante (28') der Ablaufwand (28) sicherzustellen und daß mit der Überlaufkante (26²) die Höhe der Ablaufrohrsohle (21) bestimmt wird.

3. Leichtflüssigkeitsabscheider-Anlage nach Anspruch 1, dadurch gekennzeichnet, daß der Abscheideraum (16) und der Feinabscheideraum (19) so ausgebildet sind, daß die Gesamthöhe, die Oberfläche des Abscheideraums (16) und des Feinabscheideraums (19), der Ablaufquerschnitt in den Stömungs-technischen Einrichtungen (18) und (18') und das Volumen des Flüssigkeits-Durchgangs so aufeinander abgestimmt sind, daß im Abscheideraum (16) und Feinabscheideraum (19) je nach Durchgang eine Geschwindigkeit von unter 2 cm/s eingehalten wird.

4. Leichtflüssigkeitsabscheider-Anlage nach Anspruch 1 dadurch gekennzeichnet, daß die Strömungs-technische Einrichtung (18) des Abscheideraums (16) so ausgeführt ist, daß je nach Reduzierung des freien Durchgangs die gleichmäßige, geringe Absinkgeschwindigkeit eingehalten wird.

5. Leichtflüssigkeitsabscheider-Anlage nach Anspruch 4, dadurch gekennzeichnet, daß der Feinabscheideraum (19) eine Strömungs-technische Einrichtung besitzt, deren Öffnungen, gleichmäßig verteilt, so bemessen sind, daß die Absinkgeschwindigkeit unter 2 cm/s beträgt.

6. Leichtflüssigkeitsabscheider-Anlage nach Anspruch 1, dadurch gekennzeichnet, daß die Strömungsführung des Leichtflüssigkeits-/Schwerflüssigkeits-Gemischs so gestaltet ist, daß drei Überlaufkanten entstehen, 1. Überlaufkante des Wasserspiegels im Ruhestand (23), 2. Überlaufkante am unteren Zutritt des Leichtflüssigkeits-Sammelraums (14), und 3. Überlaufkante der Schwerflüssigkeits-Absenkung im Abscheideraum (16).

7. Leichtflüssigkeitsabscheider-Anlage nach Anspruch 1, dadurch gekennzeichnet, daß ein kombinierter Leichtflüssigkeitsablauf (6) installiert ist, dessen Außenwände bis zur Oberkante des Abscheiders geführt sind und deren zwei Leichtflüssigkeitsabläufe (9) und (10) durch eine Zwischenwand (7) getrennt sind, daß der Leichtflüssigkeitsablauf (6) für den Leichtflüssigkeits-Sammelraum (14) einen, in der Höhe verstellbaren, Rohrstutzen (10) aufweist, der vom Leichtflüssigkeits-Sammelraum (14) ausgeht, daß der Leichtflüssigkeitsablauf (10) für den äußeren Bereich bzw. für die Leichtflüssigkeit der gesamten Oberfläche bestimmt ist und geringfügig unter dem Wasserspiegel im Betrieb (17) eine nach unten gerichtete Überlaufkante (8) besitzt, durch die die Dicke der Leichtflüssigkeitschicht begrenzt ist, daß auf dem Zwischenboden (6'), der etwas über der Überlaufkante (8) angebracht ist, ein in der Höhe verstellbarer Leichtflüssigkeitsablauf-Rohrstutzen (9) angebracht ist, daß beide Abläufe (9) und (10) zum Leichtflüssigkeits-Speicher (15) führen, daß im Betrieb nach Ansammlung des Funktions-bedingten Leichtflüssigkeits-Volumens alle weitere Leichtflüssigkeit über die beiden Leichtflüssigkeitsablauf-Rohrstutzen (9) und (10) in den Leichtflüssigkeits-Speicher (15) abgeleitet wird.

8. Leichtflüssigkeitsabscheider-Anlage nach Anspruch 7, dadurch gekennzeichnet, daß die Überlaufkante (12) im Zulaufschacht (13) so tief unter der Ablaufrohrsohle (21) angeordnet ist, wie es der Leichtflüssigkeits-Säule unter dem Wasserspiegel der niedrigsten Dichte entspricht, daß die Ablaufrohrsohle so tief unter dem Wasserspiegel im Ruhestand (23) liegt, wie es der Leichtflüssigkeits-Säule über dem Wasserspiegel der niedrigsten Dichte entspricht, daß beide Leichtflüssigkeits-Säulen, unter und über dem Wasserspiegel, der Höhe der Funktions-bedingten Leichtflüssigkeits-Säule entspricht und somit nach Abstellen des Zuflusses beim Absinken des Wasserspiegels im Betrieb (17) auf den Wasserspiegel im Ruhestand (23) die Leichtflüssigkeit der äußeren Oberfläche, ausgenommen die Funktionsbedingte Leichtflüssigkeit, vom Leichtflüssigkeits-Speicher (15) aufgenommen wird.

9. Leichtflüssigkeitsabscheider-Anlage nach Anspruch 1, dadurch gekennzeichnet, daß sich der Schwimmer (49) in einem trockenen Schwimmergehäuse (48) befindet und der nur dann den Zulaufverschluß (31) durch Zulauf von Schwerflüssigkeit über den Schwerflüssigkeitszulauf-Rohrstutzen (51) oder den Zulauf von Leichtflüssigkeit über das Leichtflüssigkeitszulauf-Rohr (50) auslöst, wenn der max.-Stand der Schwer- oder Leichtflüssigkeit überschritten wird.

10. Leichtflüssigkeitsabscheider-Anlage nach Anspruch 1, dadurch gekennzeichnet, daß der aus durchsichtigem Material (Glas oder Plexi-Glas) bestehende Leichtflüssigkeitsablauf-Rohrstutzen (10) so auf den Schwerflüssigkeitszulauf-Rohrstutzen (51) abgestimmt ist, daß der Zulaufverschluß (31) dann durch Zulauf von Schwerflüssigkeit ausgelöst wird, wenn das Ende der Leichtflüssigkeits-Säule unter dem Wasserspiegel im Leichtflüssigkeitsablauf-Rohrstutzen (10) sichtbar wird.

11. Leichtflüssigkeitsabscheider-Anlage nach Anspruch 1, dadurch gekennzeichnet, daß das Abschlußorgan (34) des Zulaufverschlusses (31) aus einem Kugelabschnitt (34) besteht, der über eine Vorrichtung mit Kreuzgelenk (35) mit axialem Spiel und einer Gelenkwelle (39) mit äußeren Hebl (43) verbunden ist, mit dem das Abschlußorgan (34) nach einer Auslösung wieder in die Stellung "Offen" gebracht wird.

12. Leichtflüssigkeitsabscheider-Anlage nach Anspruch 10 und 11, dadurch gekennzeichnet, daß im Bereich des Wasserspiegels im Gehäuse (32) eine Grundplatte (40) mit Durchflußöffnung angeordnet ist, deren Dichtfläche (41) mit einer, an der Durchflußöffnung einen geringenüberstand aufweisenden, Flächendichtung ausgestattet ist, so daß sich das Abschlußorgan (34) selbsttätig und gleichmäßig auf der Dichtfläche (41) auflegt.
